# EUROPÄISCHE PATENTSCHRIFT

(11) **EP 2 091 141 B1**
(45) Veröffentlichungstag und Bekanntmachung des Hinweises auf die Patenterteilung: **07.08.2013**
(21) Anmeldenummer: 08021701.1
(22) Anmeldetag: 15.12.2008
(51) Int. Cl.: H02M 7/08

(54) **Elektrische Schaltung mit einem Transformator und mit mindestens zwei Diodenbrücken**
Electric switch with a transformer and a minimum of two diode bridges
Commutation électrique dotée d'un transformateur et d'au moins deux ponts de diodes

(30) Priorität: 12.02.2008 DE 102008008587
(43) Veröffentlichungstag der Anmeldung: 19.08.2009
(73) Patentinhaber: Converteam GmbH, 12277 Berlin (DE)
(72) Erfinder: Zingel, Reinhard, 12207 Berlin (DE); Lange, Axel, 31515 Wunstorf (DE)
(74) Vertreter: Dreiss

(56) Entgegenhaltungen:
- EP-A2- 0 126 180
- DE-A1- 4 025 685

## Beschreibung

Die Erfindung betrifft eine elektrische Schaltung nach dem Oberbegriff des Anspruchs 1. Eine derartige Schaltung ist aus der DE 40 15 685 A1 bekannt.

In der DE 103 27 407 A1 ist ein Umrichter über einen Transformator mit einem elektrischen Netz eines Energieversorgungsunternehmens verbunden. Der Umrichter wird 12-pulsig betrieben, was beispielsweise mit Hilfe zweier 6-pulsiger Diodenbrücken erreicht werden kann. Der Transformator kann beispielsweise eine Stern-Dreieck-Schaltung aufweisen, so dass an den Ausgängen der Diodenbrücken eine Phasenverschiebung der drei Netzphasen von 30 Grad zueinander entsteht.
Es ist bekannt, dass ein derartiger Umrichter netzseitige Oberschwingungen erzeugt, die zu Verzerrungen der von dem Energieversorgungsunternehmen erzeugten Spannung führen.

Zur Verminderung dieser Oberschwingungen ist in der DE 103 27 407 A1 eine zusätzliche Filter- und Sperrschaltung vorgesehen, die dem Umrichter parallel geschaltet ist.

Voraussetzung für eine Verminderung der Anteile der 6-pulsigen charakteristischen Oberschwingungen ist jedoch, dass die beiden Diodenbrücken ausgangsseitig Stromverläufe besitzen, die einen möglichst gleich großen Überlappungswinkel aufweisen. Unter dem Überlappungswinkel versteht man dabei die in Winkelgraden angegebene Zeitdauer, in der zwei in der Stromführung sich ablösende Ventile infolge der wirksamen Impedanzen gleichzeitig Strom führen.

Aufgrund von Toleranzen der Wicklungen des Transformators ist dieser Überlappungswinkel an den netzseitigen Eingängen der beiden Diodenbrücken in der Realität nicht gleich groß. Dies hat zur Folge, dass bei einem 12-pulsigen Umrichter insbesondere die 5. und 7. Harmonischen nicht vollständig gelöscht werden, sondern sogenannte Residuals verbleiben. Zur Verminderung dieser Residuals müssen weitere Filterschaltungen vorgesehen werden.

Aufgabe der vorliegenden Erfindung ist es, eine elektrische Schaltung zu schaffen, die mit möglichst geringem Aufwand eine möglichst weitgehende Verminderung der Residuals erreicht.

Die Erfindung löst diese Aufgabe durch eine elektrische Schaltung nach dem Anspruch 1.

Bei der erfindungsgemäßen elektrischen Schaltung ist jeder der Diodenbrücken eine Induktivität zugeordnet. Die Werte dieser Induktivitäten sind derart eingestellt, dass die Überlappungswinkel der Stromverläufe an den netzseitigen Eingängen der Diodenbrücken weitestgehend gleich groß sind. Dabei wird unter dem Überlappungswinkel eines Stromverlaufs diejenige Zeitdauer in Winkelgraden verstanden, in der zwei in der Stromführung sich ablösende Dioden gleichzeitig Strom führen.

Dies hat zur Folge, dass weitestgehend keine Residuals mehr vorhanden sind. Insbesondere werden beispielsweise die 5. und 7. Harmonischen weitestgehend vollständig gelöscht, so dass die 6-pulsigen Anteile der netzseitigen Oberschwingungen nicht entstehen bzw. vernachlässigbar sind. Es entsteht somit beispielsweise ein nahezu "perfekter" 12-pulsiger Umrichter.

Besonders vorteilhaft ist es, wenn bei mehr als zwei vorhandenen Diodenbrücken die Werte der zugehörigen Induktivitäten zuerst paarweise eingestellt werden. Damit ist es möglich, dass nacheinander letztlich alle Induktivitäten derart eingestellt werden können, dass die an den Eingängen der Diodenbrücken vorhandenen Überlappungswinkel weitestgehend gleich groß sind.

Bei vorteilhaften Ausgestaltungen der Erfindung sind die Induktivitäten als vorzugsweise verstellbare Luftdrosseln und/oder Tauchkerndrosseln ausgebildet und/oder es sind die Induktivitäten als elektrische Kabel mit unterschiedlichen Längen ausgebildet. Diese Ausgestaltungen ermöglichen besonders einfache und kostengünstige Realisierungen der Induktivitäten. Ebenfalls ist es möglich, die Induktivitäten auch noch nachträglich einer vorhandenen elektrischen Schaltung hinzuzufügen.
Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

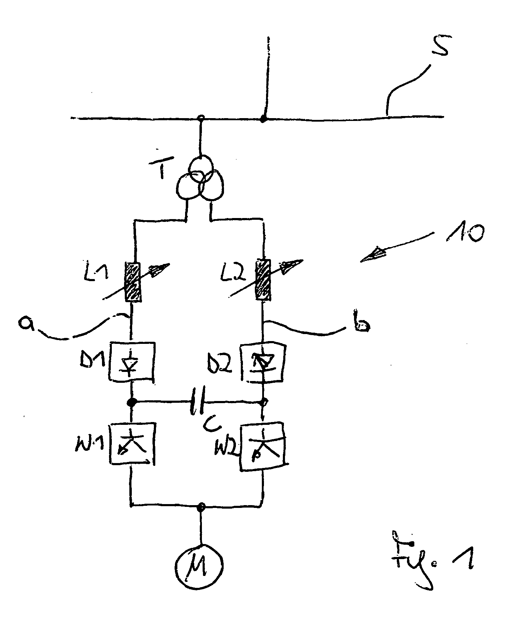

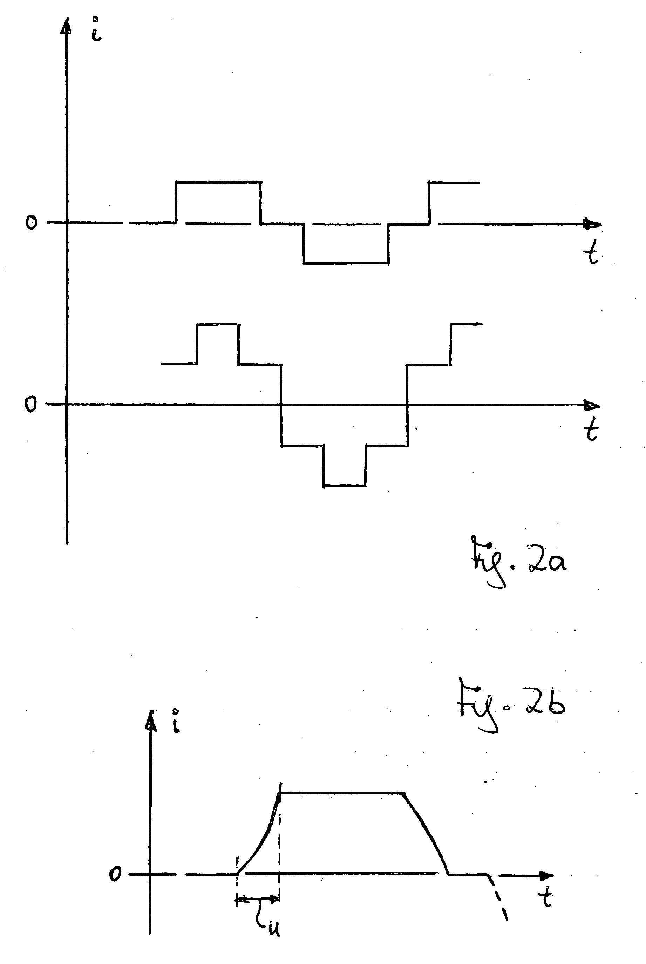

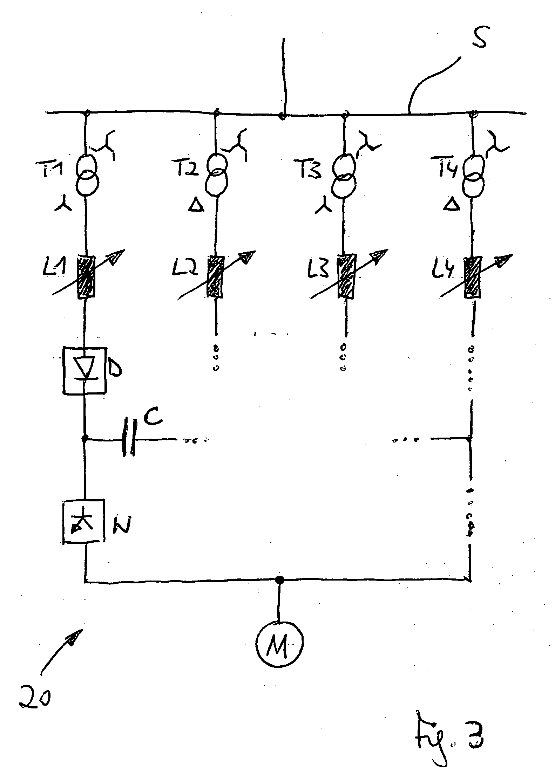

Figur 1 zeigt ein schematisches Blockschaltbild eines ersten Ausführungsbeispiels einer erfindungsgemäßen elektrischen Schaltung, Figuren 2a und 2b zeigen Stromverläufe in der Schaltung der Figur 1, und Figur 3 zeigt ein schematisches Blockschaltbild eines zweiten Ausführungsbeispiels einer erfindungsgemäßen elektrischen Schaltung.

Die Figuren 1 und 3 zeigen jeweils einpolige Darstellungen einer dreipoligen elektrischen Schaltung. In beiden Figuren ist eine Drehstromsammelschiene S vorhanden, die in nichtdargestellter Weise mit einem elektrischen Netz eines Energieversorgungsunternehmens verbunden ist. Es wird nachfolgend von einer im wesentlichen symmetrischen Netzspannung ausgegangen.

In der Figur 1 ist eine elektrische Schaltung 10 dargestellt, bei der die Drehstromsammelschiene S mit einem mehrere Wicklungen aufweisenden Transformator T verbunden ist. Der Transformator T ist über eine erste Induktivität L1 mit einer ersten Diodenbrücke D1 verbunden. Die erste Diodenbrücke D1 ist mit einem ersten Wechselrichter W1 verbunden, an den beispielhaft ein Elektromotor M angeschlossen ist. Es versteht sich, dass auch mehrere Elektromotoren vorhanden sein können. Der Transformator T ist weiterhin über eine zweite Induktivität L2 mit einer zweiten Diodenbrücke D2 verbunden, die ihrerseits über einen zweiten Wechselrichter W2 mit dem Elektromotor M verbunden ist. Die Verbindungspunkte der Diodenbrücken D1, D2 und der Wechselrichter W1, W2 sind über einen Kondensator C miteinander verbunden.

Der Transformator T weist in Richtung zu der ersten Induktivität L1 eine Stern-Stern-Schaltung auf, so dass in dieser Richtung ausgangsseitig keine Verschiebung der drei Netzphasen zueinander vorhanden ist. Der Transformator T besitzt in Richtung zu der zweiten Induktivität L2 eine Stern-Dreieck-Schaltung, so dass in dieser Richtung ausgangsseitig eine Phasenverschiebung der drei Netzphasen um 30 Grad im Vergleich zu dem Ausgang des Transformators T in der erstgenannten Richtung entsteht.

Die beiden Induktivitäten L1, L2 können auf einen erwünschten Wert eingestellt werden. Bei den beiden Induktivitäten L1, L2 kann es sich um stufenlos verstellbare Luftdrosseln und/oder stufenlos einstellbare Tauchkerndrosseln handeln. Alternativ oder zusätzlich ist es möglich, dass die beiden Induktivitäten L1, L2 durch elektrische Kabel unterschiedlicher Länge gebildet werden, wobei die Einstellbarkeit der Induktivitäten L1, L2 dann durch die Wahl der Kabellänge realisiert werden kann. Die beiden Induktivitäten L1, L2, insbesondere in der Form von elektrischen Kabeln, können auch noch nachträglich in eine bereits vorhandene elektrische Schaltung eingefügt werden, so dass auf diese Weise eine Nachrüstung möglich ist.

Bei den beiden Diodenbrücken D1, D2 kann es sich um 6-pulsige Brückenschaltungen handeln. Die beiden Diodenbrücken D1, D2 können alternativ auch als Thyristorbrücken ausgebildet sein. Durch die Parallelschaltung der beiden Diodenbrücken D1, D2 an der Drehstromsammelschiene S sowie durch die Phasenverschiebung der drei Netzphasen von 30 Grad in Richtung der beiden Induktivitäten L1, L2 ergibt sich insgesamt ein 12-pulsiger Umrichter.

An den in der Figur 1 mit a und b gekennzeichneten Punkten der Diodenbrücken D1, D2 sollten an sich Ströme vorhanden sein, wie sie in der Figur 2a dargestellt sind. Die dort gezeigten Stromverläufe entsprechen jedoch nicht der Realität, sondern sind nur unter idealen Bedingungen möglich.

Unter realen Bedingungen sind die Flanken der an den netzseitigen Eingängen der Diodenbrücken D1, D2 vorhandenen Stromverläufe jedoch nicht sprungförmig, sondern es ergeben sich aufgrund der Wicklungen des Transformators T Übergangskurven, wie dies in der Figur 2b vergrößert an zwei aufeinanderfolgenden Flanken beispielhaft gezeigt ist. In der Realität sind die Stromverläufe der Figur 2a also entsprechend dem Beispiel der Figur 2b "verschmiert bzw. geglättet".

Die Zeitdauer der gezeigten Übergangskurve, also der Zeitbereich, der für den Übergang des Stroms erforderlich ist, wird als Überlappungswinkel u bezeichnet. In diesem Zeitbereich wird der Strom nicht nur von einer Diode geführt, sondern aufgrund der aktuell wirksamen Impedanzen gleichzeitig von denjenigen beiden Dioden, die einander momentan ablösen.

Die Reaktanzen der verschiedenen Wicklungen des Transformators T sind in der Realität unter anderem aufgrund der bereits erwähnten Toleranzen immer zumindest geringfügig unterschiedlich. Ohne die Induktivitäten L1, L2 hätte dies an sich zur Folge, dass sich in den beiden Punkten a, b insbesondere im Hinblick auf die Übergangskurven zumindest geringfügig unterschiedliche Stromverläufe ergeben würden. Dies würde auch bedeuten, dass die Stromverläufe in den beiden Punkten a, b ohne die beiden Induktivitäten L1, L2 unterschiedliche Überlappungswinkel u besitzen würden. Wie eingangs erläutert wurde, bringen unterschiedliche Überlappungswinkel den Nachteil von Residuals mit sich.

Die beiden Induktivitäten L1, L2 werden nun derart eingestellt, dass die Überlappungswinkel u in den beiden Punkten a, b weitestgehend gleich groß sind. Mit Hilfe der einstellbaren Induktivitäten L1, L2 werden die Toleranzen der Wicklungen des Transformators T also gerade so ausgeglichen, dass gleich große Überlappungswinkel u an den Eingängen der beiden Diodenbrücken D1, D2 entstehen. Mit anderen Worten bedeutet dies, dass die beiden Induktivitäten L1, L2 gerade so gewählt werden, dass die für den Punkt a wirksamen Induktivitäten des Transformators T zuzüglich der Induktivität L1 möglichst gleich groß sind wie die für den Punkt b wirksamen Induktivitäten des Transformators T zuzüglich der Induktivität L2.

Die gleich großen Überlappungswinkel u in den beiden Punkten a, b haben zur Folge, dass weitestgehend keine Residuals mehr vorhanden sind. Insbesondere werden beispielsweise die 5. und 7. Harmonischen weitestgehend vollständig gelöscht, so dass die netzseitigen 6-pulsigen Anteile der Oberschwingungen nicht entstehen bzw. vernachlässigbar sind. Es entsteht somit ein nahezu "perfekter" 12-pulsiger Umrichter.

In der Figur 3 ist eine elektrische Schaltung 20 gezeigt, bei der die Drehstromsammelschiene S mit einem Transformator verbunden ist, der in der Form von vier Einzel-Transformatoren T1, T2, T3, T4 dargestellt ist. Die Einzel-Transformatoren T1, T2 weisen netzseitig eine Sternschaltung auf, die mit einer Phasenverschiebung von - 7,5 Grad versehen ist, und die Einzel-Transformatoren T3, T4 weisen netzseitig eine Sternschaltung auf, die mit einer Phasenverschiebung von +7,5 Grad versehen ist. Ausgangsseitig weisen die Einzel-Transformatoren T1, T3 eine Sternschaltung auf, während die Einzel-Transformatoren T2, T4 mit einer Dreieckschaltung versehen sind, so dass eine Phasenverschiebung der drei Netzphasen um 30 Grad im Vergleich zu den Einzel-Transformatoren T1, T3 entsteht.

Den vier Einzel-Transformatoren T1, T2, T3, T4 ist jeweils eine einstellbare Induktivität L1, L2, L3, L4 zugeordnet. Diese Induktivitäten L1, L2, L3, L4 sind mit vier Diodenbrücken verbunden, die in der Figur 3 nur durch eine einzelne Diode D angedeutet sind. Ausgangsseitig sind die vier Diodenbrücken über Kondensatoren C miteinander gekoppelt. Diese Zwischenkreise können auch voneinander entkoppelt ausgebildet sein. Weiterhin sind die vier Diodenbrücken mit vier Wechselrichtern verbunden, die in der Figur 3 wiederum nur durch einen einzelnen Wechselrichter W angedeutet sind, und an die ihrerseits ein/mehrere Elektromotor/en M angeschlossen ist/sind.

Ergänzend wird darauf hingewiesen, dass die vier Induktivitäten L1, L2, L3, L4 auch primärseitig vorgesehen sein könnten.

Bei den vier Diodenbrücken kann es sich um 6-pulsige Brückenschaltungen handeln. Die Diodenbrücken können alternativ auch als Thyristorbrücken ausgebildet sein. Durch die Parallelschaltung der Diodenbrücken an der Drehstromsammelschiene S sowie durch die erläuterte Phasenverschiebung der drei Netzphasen von 30 Grad bzw. 15 Grad ergibt sich insgesamt ein 24-pulsiger Umrichter.

An den Eingängen der Diodenbrücken sollten an sich ähnliche Ströme vorhanden sein, wie sie in der Figur 2a dargestellt sind. Wie bereits erläutert wurde, entsprechen die dort gezeigten Stromverläufe jedoch nicht der Realität, sondern sind nur unter idealen Bedingungen möglich. Wie ebenfalls bereits erläutert wurde, sind die Flanken dieser Stromverläufe unter realen Bedingungen nicht sprungförmig, sondern es ergeben sich aufgrund der Wicklungen der Einzel-Transformatoren T1, T2, T3, T4 Übergangskurven, wie dies in der Figur 2b vergrößert an zwei aufeinanderfolgenden Flanken beispielhaft gezeigt ist.

Die Reaktanzen der verschiedenen Wicklungen der Einzel-Transformatoren T1, T2, T3, T4 sind in der Realität immer zumindest geringfügig unterschiedlich. Entsprechend den Erläuterungen zur Schaltung 10 der Figur 1 hat dies auch bei der Schaltung 20 der Figur 3 zur Folge, dass die Stromverläufe an den Eingängen der Diodenbrücken der Figur 3 ohne die Induktivitäten L1, L2, L3, L4 unterschiedliche Überlappungswinkel u besitzen würden. Wie eingangs erläutert wurde, bringen unterschiedliche Überlappungswinkel den Nachteil von Residuals mit sich.

Die Induktivitäten L1, L2, L3, L4 werden nun derart eingestellt, dass die Überlappungswinkel u an den Eingängen der Diodenbrücken weitestgehend gleich groß sind. Mit Hilfe der einstellbaren Induktivitäten L1, L2, L3, L4 werden die Toleranzen der Wicklungen der Einzel-Transformatoren T1, T2, T3, T4 also gerade so ausgeglichen, dass gleich große Überlappungswinkel u an den Eingängen der Diodenbrücken entstehen.

Hierzu werden zuerst die Induktivitäten L1, L2 derart eingestellt, dass die beiden zugehörigen Diodenbrücken eingangsseitig einen möglichst gleich großen Überlappungswinkel aufweisen. Mit Hilfe der einstellbaren Induktivitäten L1, L2 werden die Toleranzen der Wicklungen der Einzel-Transformatoren T1, T2 also gerade so ausgeglichen, dass die Überlappungswinkel an den beiden nachgeordneten Diodenbrücken im wesentlichen gleich groß sind.

Danach werden die Induktivitäten L3, L4 in entsprechender Weise eingestellt, so dass also die Überlappungswinkel an den beiden nachgeordneten Diodenbrücken im wesentlichen gleich groß sind.

In einem weiteren Schritt werden die Induktivitäten L1, L2 und die Induktivitäten L3, L4 paarweise eingestellt, und zwar derart, dass sämtliche Überlappungswinkel im wesentlichen gleich groß sind. Die vorgenannte paarweise Einstellung bedeutet, dass die vorhergehende Angleichung der Überlappungswinkel beispielsweise der ersten beiden Diodenbrücken erhalten bleibt, dass also beispielsweise die Induktivitäten L1, L2 nur gemeinsam und in gleicher Weise verstellt werden.

Der sich ergebende, im wesentlichen gleich große Überlappungswinkel der Eingänge der Diodenbrücken hat zur Folge, dass weitestgehend keine Residuals mehr vorhanden sind. Es entsteht somit ein nahezu "perfekter" 24-pulsiger Umrichter.

Es versteht sich, dass auf entsprechende Art und Weise auch ein 18-pulsiger oder ein 36-pulsiger Umrichter erstellt werden kann.

## Patentansprüche

1. Elektrische Schaltung (10; 20) mit einem an ein elektrisches Netz angeschlossenen Transformator (T; T1, T2, T3, T4), der mit mindestens zwei Diodenbrücken (D1, D2; D) gekoppelt ist, an denen eine Last anliegt, und denen jeweils eine Induktivität (L1, L2; L1, L2, L3, L4) zugeordnet ist, **dadurch gekennzeichnet, dass** die Werte der Induktivitäten derart eingestellt sind, dass die Überlappungswinkel (u) der Stromverläufe an den Eingängen der Diodenbrücken weitestgehend gleich groß sind, wobei unter dem Überlappungswinkel (u) eines Stromverlaufs diejenige Zeitdauer in Winkelgraden verstanden wird, in der zwei in der Stromführung sich ablösende Dioden gleichzeitig Strom führen.

2. Elektrische Schaltung nach Anspruch 1, wobei zwei Diodenbrücken vorgesehen sind, die als 6-pulsige Diodenbrücken ausgebildet sind, wobei der Transformator derart geschaltet ist, dass die Diodenbrücken einen 12-pulsigen Umrichter bilden.

3. Elektrische Schaltung nach Anspruch 1, wobei vier Diodenbrücken vorgesehen sind, die als 6-pulsige Diodenbrücken ausgebildet sind, und wobei der Transformator derart geschaltet ist, dass die Diodenbrücken einen 24-pulsigen Umrichter bilden.

4. Elektrische Schaltung nach Anspruch 3, wobei die Werte der Induktivitäten zuerst paarweise eingestellt werden.

5. Elektrische Schaltung nach einem der vorstehenden Ansprüche, wobei die Induktivitäten stufenlos einstellbar sind.

6. Elektrische Schaltung nach Anspruch 5, wobei die Induktivitäten als Luftdrosseln und/oder Tauchkerndrosseln ausgebildet sind.

7. Elektrische Schaltung nach Anspruch 5 oder 6, wobei die Induktivitäten als elektrische Kabel mit unterschiedlichen Längen ausgebildet sind.

8. Elektrische Schaltung nach einem der vorstehenden Ansprüche, wobei die Diodenbrücken ausgangsseitig über einen Kondensator (C) miteinander gekoppelt sind oder voneinander entkoppelt sind.

9. Elektrische Schaltung nach einem der vorstehenden Ansprüche, wobei den Diodenbrücken ein Wechselrichter (W1, W2; W) nachgeordnet ist.

## Claims

1. Electrical circuit (10, 20) having a transformer (T; T1, T2, T3, T4) connected to an electrical mains supply, which transformer (T; T1, T2, T3, T4) is coupled to at least two diode bridges (D1, D2; D) to which a load is connected and with which respective inductors (L1, L2; L1, L2, L3, L4) are associated, **characterised in that** the values of the inductors are set in such a way that the angles of overlap (u) of the current waveforms at the inputs to the diode bridges are very largely of equal sizes, what is meant by the angle of overlap (u) of a current waveform being that period of time in degrees of angle during which two diodes which take over from another in carrying current carry current simultaneously.

2. Electrical circuit according to claim 1, wherein two diode bridges are provided which take the form of 6-pulse diode bridges, the transformer being connected in such a way that the diode bridges form a 12-pulse converter.

3. Electrical circuit according to claim 1, wherein four diode bridges are provided which take the form of 6-pulse diode bridges, and wherein the transformer is connected in such a way that the diode bridges form a 24-pulse converter.

4. Electrical circuit according to claim 3, wherein the values of the inductors are first set in pairs.

5. Electrical circuit according to one of the preceding claims, wherein the inductors can be set steplessly.

6. Electrical circuit according to claim 5, wherein the inductors take the form of air-core inductors and/or plunger-core inductors.

7. Electrical circuit according to claim 5 or 6, wherein the inductors take the form of electrical cables of different lengths.

8. Electrical circuit according to one of the preceding claims, wherein, at the output end, the diode bridges are coupled together by a capacitor (C) or are decoupled from one another.

9. Electrical circuit according to one of the preceding claims, wherein the diode bridges each have an inverter (W1, W2; W) positioned downstream of them.

## Revendications

1. Commutation électrique (10; 20) avec un transformateur (T; T1, T2, T3, T4) raccordé à un réseau électrique, qui est couplé avec au moins deux ponts de diodes (D1, D2; D), auxquels s'applique une résistance et auxquels est associé respectivement une inductance (L1, L2; L1, L2, L3, L4), **caractérisé en ce que** les valeurs des inductances sont ajustées de manière à ce que les angles de recouvrement (u) des profils de courant au niveau des entrées des ponts de diodes soient essentiellement de même taille, l'angle de recouvrement (u) d'un profil de courant désignant la durée en degrés d'angle pendant laquelle deux diodes se succédant dans l'acheminement de courant acheminent simultanément du courant.

2. Commutation électrique selon la revendication 1, dans laquelle sont prévus deux ponts de diodes qui sont réalisés sous forme de ponts de diodes 6 pulses, et dans laquelle le transformateur est commuté de manière à ce que les ponts de diodes forment un convertisseur 12 pulses.

3. Commutation électrique selon la revendication 1, dans laquelle sont prévus quatre ponts de diodes qui sont réalisés sous forme de ponts de diodes 6 pulses, et dans laquelle le transformateur est commuté de manière à ce que les ponts de diodes forment un convertisseur 24 pulses.

4. Commutation électrique selon la revendication 3, dans laquelle les valeurs des inductances sont d'abord ajustées par paires.

5. Commutation électrique selon l'une quelconque des revendications précédentes, dans laquelle les inductances peuvent être ajustées en continu.

6. Commutation électrique selon la revendication 5, dans laquelle les inductances sont réalisées sous forme de self sans fer et/ou de self à noyau plongeur.

7. Commutation électrique selon la revendication 5 ou 6, dans laquelle les inductances sont réalisées sous forme de câbles électriques de longueurs différentes.

8. Commutation électrique selon l'une quelconque des revendications précédentes, dans laquelle les ponts de diodes sont couplés les uns avec les autres côté sortie par l'intermédiaire d'un condensateur (C) ou sont découplés les uns des autres.

9. Commutation électrique selon l'une quelconque des revendications précédentes, dans laquelle un onduleur (W1, W2; W) est agencé en aval des ponts de diodes.
